# EUROPÄISCHE PATENTANMELDUNG

(11) **EP 2 325 455 A1**
(43) Veröffentlichungstag der Anmeldung: **25.05.2011**
(21) Anmeldenummer: 10014479.9
(22) Anmeldetag: 11.11.2010
(51) Int. Cl.: F02B 77/08, F16H 7/08, F16H 7/18, F16H 55/36

(54) **Synchronriemengetriebe**

(30) Priorität: 18.11.2009 DE 102009053827
(71) Anmelder: EBERT Kettenspanntechnik GmbH, 04435 Schkeuditz (DE)
(72) Erfinder: Ebert, Siegfried, Dipl.-Ing. Ök., 04435 Schkeuditz (DE); Meier, Hartmut, Dipl.-Ing. (FH), 06779 Schierau (DE); Ebert, Frank, 04435 Schkeuditz (DE); Tanzmann, Horst, 04157 Leipzig (DE)

(57) **Zusammenfassung**

Die Erfindung betrifft ein Synchronriemengetriebe mit vorspannungsfrei gesichertem Formschluss zwischen dem Synchronriemen und den Synchronscheiben.

Der Nachteil bekannter Synchronriemengetriebe besteht darin, dass Synchronriemen und Synchronscheiben eine über die Anforderungen durch die Kraft im Lasttrum hinausgehende zusätzliche Sicherheit infolge der Spannkraft aufweisen müssen.

Diese notwendige Überdimensionierung hat nachteilige Wirkungen auf den Wirkungsgrad, das Laufgeräusch und den Verschleiß des Synchronriemengetriebes.

Das Problem wird hydrodynamisch gelöst durch ein im überschüssigen Kontakt mit einem Fluid (5) oder Gas- Fluid- Gemisch angeordnetes Synchronriemengetriebe und durch mindestens ein vollständig oder teilweise über dem Segment des Umschlingungsbogens des Synchronriemens (3) und über dem Riemenrücken mit einer radialen Distanz ΔR, welche kleiner ist, als die Zahnhöhe h des Synchronriemens, angeordnetes Stauelement (7,8) mit radial gekrümmte Staufläche.

## Beschreibung

Die Erfindung betrifft ein Synchronriemengetriebe, welches in einem Fluid oder in einem Gas- Fluid- Gemisch angeordnet ist. Sie ist anwendbar im Maschinen- und Fahrzeugbau für präzise und kompakte Zugmittelgetriebe, beispielsweise für Ausgleichswellen oder Ölpumpen in Brennkraftmaschinen, insbesondere zum Ausgleich von Montagetoleranzen und von thermischen Maßänderungen unter Betriebsbedingungen.

Es gilt als allgemeines fachliches Wissen, dass Synchronriemen zwecks Sicherung des Formschlusses zu den Synchronscheiben vorzuspannen sind. Die entsprechende, im eingebauten Zustand des Synchronriemens auf den Lostrum aufzubringende Vorspannung *Fᵥ* liegt, bezogen auf die Kraft *F_{I}* im Lasttrum häufig, doch je nach Synchronriemengetriebe meist bei *Fᵥ* = 1,5 *F_{I}* bis *Fᵥ* = 2,5 *F_{I}*. Zur Realisierung der Vorspannung in Synchronriemengetrieben besteht eine Vielzahl von Methoden und Spannvorrichtungen:
Ohne Vorrichtungen ist das Vorspannen durch Veränderung des Achsabstandes der Synchronscheiben zu erreichen. In Synchronriemengetrieben mit unveränderlichem Achsabstand wird das Vorspannen mittels verstellbarer oder elastischer, gegen den Lostrum gerichteter Spannrollen realisiert.

In der DE 10 2007 031 985 B3 wird das Vorspannen von Synchronriemengetrieben durch ein elastisches, ringförmiges, zwischen den Trumen angeordnetes und auf beide Trume wirkendes Spann- und Dämpfungselement realisiert.

In der DE 10 2008 011 137 A1 wird das Vorspannen durch einen elastischen Spannring vorgeschlagen, welcher zwischen den Trumen angeordnet ist und mit seiner Elastizität und/ oder seine Position zwischen den Trumen eine diametrale Spannkraft auf diese bewirkt.

Ferner ist aus der DE 10 2004 039 320 A1 ein Zahnriemengetriebe innerhalb eines Gehäuses bekannt, bei dem der Zahnriemen mit Schmierstoff aus einem Ölsumpf benetzt wird, um sein Laufgeräusch zu reduzieren.

Der gemeinsame Nachteil dieser Methoden und Vorrichtungen besteht darin, dass Synchronriemen und Synchronscheiben eine über die Anforderungen durch die Kraft *F_{I}* im Lasttrum hinausgehende zusätzliche konstruktive Sicherheit infolge der Spannkraft aufweisen müssen.

Diese notwendige Überdimensionierung hat nachteilige Wirkungen auf den Wirkungsgrad, das Laufgeräusch und den Verschleiß des Synchronriemengetriebes.

Darüber hinaus bestehen bei verstellbaren oder elastischen, gegen den Lostrum gerichteten Spannrollen Nachteile bezüglich der Anzahl der Montageteile und deren Montagebasis, des Bauraumbedarfs sowie der Montage selbst.

Die technische Ursache der Mängel besteht in den über oder zwischen den freien Trumen angeordneten, eine Vorspannung vermittelnden Vorrichtungen.

Ziel der Erfindung ist ein Synchronriemengetriebe, welches die vorspannungsbedingte Überdimensionierung vermeidet und höheren Wirkungsgrad, kleineres Laufgeräusch, weniger Verschleiß, weniger Montageteile und kleineren Bauraum aufweist.

Aufgabe der Erfindung ist ein Synchronriemengetriebe, welches vorspannungsfrei den Formschluss zwischen dem Synchronriemen und den Synchronscheiben sichert.

Erfindungsgemäß wird die Aufgabe durch die kennzeichnenden Merkmale des Anspruchs 1 gelöst.

Das Synchronriemengetriebe ist in einem Fluid oder im überschüssigen Kontakt mit einem Fluid oder in dessen kompressiblem Gas- Fluid- Gemisch angeordnet.

Der Synchronriemen ist mit positiver Riemenlängentoleranz montiert und nicht vorgespannt.

Über dem vollständigen oder teilweisen Segment mindestens eines Umschlingungsbogens und über die Breite des Riemens verläuft mit einer radialen Distanz mindestens ein Stauelement mit radial gekrümmter Fläche mit einer Distanz zum Riemenrücken, welche kleiner ist, als die Zahnhöhe des Synchronriemens. Für die gestellte Aufgabe kann/können das Stauelement/die Stauelemente mehrteilig oder einteilig sein oder form-additional integrativ von der Innenwand des Getriebegehäuse gebildet sein.

Der durch die radiale Distanz zwischen dem Riemenrücken und der radial gekrümmten Fläche entstehende Spalt ist vom Fluid oder vom Gas- Fluid- Gemisch gefüllt.

Dieser Spalt hat zwei Funktionen:
Beim Anlauf des Synchrongetriebes wird das Aufsteigen des Synchronriemens aus dem Zahnprofil der Synchronscheibe begrenzt und der Riemenübersprung verhindert. Es kommt kurzzeitig zum geschmierten Kontakt des Riemenrückens mit der radial gekrümmten Fläche.

Ist das Synchrongetriebe in Bewegung, wird sowohl ständig Fluid oder Gas- Fluid-Gemisch in den Spalt eingezogen, als auch eine durch den Spalt verlaufende und im Getriebe zirkulierende Strömung erzeugt. Diese Strömung bewirkt ihrerseits zwischen bewegtem Riemenrücken und stehender radial gekrümmter Fläche rollende Wirbel und damit einen hydrodynamischen Druck, bekannt als Bodeneffekt, im Spalt. Die radial gekrümmte Fläche ist damit eine Staufläche. Der gegen die Staufläche und den Riemenrücken erzeugte hydrodynamische Druck bewirkt das Eingreifen des Zahnprofils des Synchronriemens in das Zahnprofil der Synchronscheibe.

Zur Dekompression des beim Riemeneinlauf in den Zahnprofilen von Synchronriemen und Synchronscheibe entstehenden pulsierenden Druckes sind eine oder mehrere vorteilhafter weise durch das Zahnprofil der Synchronscheiben verlaufende Dekompressionsnuten nebenein ander angeordnet.

Über diese Dekompressionsnuten kommt es bei laufendem Getriebe zur Dekompression des beim Riemeneinlauf in den Zahnprofilen von Synchronriemen und Synchronscheibe entstehenden Druckes durch das Ausströmen des Fluides oder Fluid- Gas-Gemisches über die Dekompressionsnuten der Synchronscheiben. Der hydrodynamische Druck gegen den Synchronriemenrücken ist größer als der infolge der Dekompression verringerte hydrodynamische Druck gegen das Zahnprofil.

Die Differenz dieser Drücke bewirkt das Eindrücken des Zahnprofils des Synchronriemens in das Zahnprofil der Synchronscheibe im Bereich des Umschlingungsbogens und damit den Formschluss.

Das vorgeschlagene Synchrongetriebe benötigt keine vorgespannten Trume und demzufolge auch keine zusätzlichen Vorrichtungen zum Vorspannen.

Dadurch, dass das Vorspannen entfällt, kann das im Wirkungsgrad verbesserte Synchrongetriebe insgesamt bezüglich Riemen, Breite, Zähnezahl, Masse, Lagerung kleiner und damit kompakter ausgelegt werden.

Ein weiterer Vorteil besteht darin, die Stauflächen im Getriebegehäuse zu integrieren. Das Synchrongetriebe ist vollständig reversierfähig und kann sowohl mit Fluid, als auch mit einem kompressiblen Gas- Fluid- Gemisch im geschlossenen Getriebegehäuse betrieben werden. Entsprechend der im Getriebe verwendeten Werkstoffe und der Einsatzbedingungen sind als Fluide Motorenöl, wässrige inhibierte Lösungen oder verflüssigte Gase vorteilhaft.

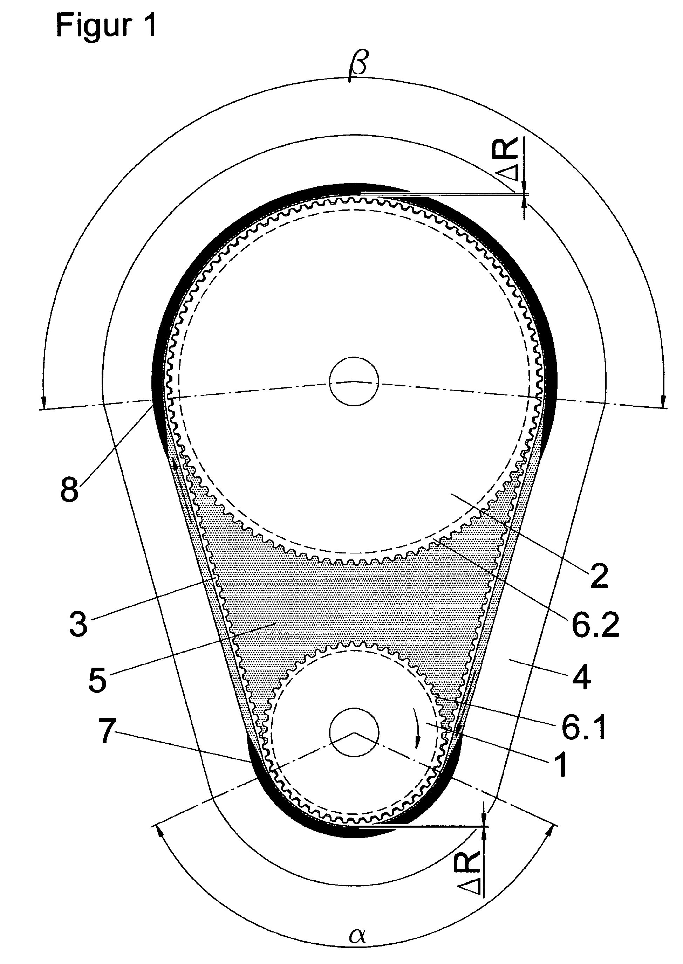

Die Erfindung soll nachstehend an einem Ausführungsbeispiel näher erläutert werden: Die dazugehörige Zeichnung zeigt in Figur 1 eine schematische Seitenansicht eines Synchrongetriebes. Wie daraus ersichtlich, besteht das Synchrongetriebe aus der treibenden Synchronscheibe 1, der getriebenen Synchronscheibe 2, dem ölbeständigen Synchronriemen 3 und dem Getriebegehäuse 4.

Der Synchronriemen ist mit positiver Riemenlängentoleranz montiert. Das Synchrongetriebe ist mit einem synthetischen Motorenöl 5 gefüllt.

Zwecks Dekompression des Druckes, welcher im Einlaufbereich des Synchronriemens in die Synchronscheiben zwischen diesen entsteht, weisen die Synchronscheiben jeweils mindestens eine, symmetrisch über ihre Breite angeordnete, durch das Zahnprofil verlaufende Dekompressionsnut 6.1 und 6.2 auf.

Das Zahnprofil des Synchronriemens hat die Zahnhöhe h.

In der radialen Distanz von ΔR= 0,3·h verlaufen über dem Umschlingungsbogen α der treibenden Synchronscheibe das Stauelement 7 und über dem Umschlingungsbogen β der getriebenen Synchronscheibe das Stauelement 8.

Die radiale Distanz von ΔR= 0,3·h begrenzt das Aufsteigen und damit den Zahnübersprung des Synchronriemens beim Getriebeanlauf.

Der zwischen dem Riemenrücken und den radial gekrümmten Stauflächen der Stauelemente jeweils bestehende Spalt mit der Spaltweite ΔR hat bei Bewegung des Synchrongetriebes mit dem Riemenrücken eine bewegte Fläche und mit der radial gekrümmten Staufläche eine stehende Fläche.

Das Motorenöl wird infolge des bewegten Riemenrückens mit der Riemengeschwindigkeit nahekommender Strömungsgeschwindigkeit in und durch den Spalt gefördert. An der stehenden Fläche des jeweiligen Stauelementes wird die Strömung des Motorenöls abgebremst. Dabei kommt es zu rollenden Wirbeln zwischen bewegter und stehender Fläche und zu einem hydrodynamischen Polster mit einem senkrecht zur Strömung wirkenden Auftrieb in Form von Druck zwischen den Flächen. Diese Wirkung ist auf das physikalische Phänomen des Bodeneffektes zurückzuführen.

Zugleich kommt es zur Dekompression des beim Riemeneinlauf in den Zahnprofilen von Synchronriemen und Synchronscheibe entstehenden Druckes durch das Ausströmen des Motorenöls über die Dekompressionsnuten der Synchronscheiben. Der hydrodynamische Druck gegen den Synchronriemenrücken ist größer als der infolge der Dekompression verringerte hydrodynamische Druck gegen das Zahnprofil.

Die Differenz dieser Drücke bewirkt das Eindrücken des Zahnprofils des Synchronriemens in das Zahnprofil der Synchronscheibe im Bereich des Umschlingungsbogens und damit den Formschluss.

Der Formschluss zwischen dem Synchronriemen und den Synchronscheiben erfordert kein sonst übliches Vorspannen des Synchronriemens.

Das vorgeschlagene Synchrongetriebe kann deshalb vorteilhaft bei vergleichbarer Belastung mit höherem Wirkungsgrad, bezüglich Riemen, Breite, Zähnezahl, Masse und Lagerung kleiner, damit kompakter ausgelegt werden.

Mit dem Motorenöl wird ein sowieso vorhandenes Medium genutzt.

## Patentansprüche

1. Synchronriemengetriebe, welches innerhalb eines ein Fluid (5) oder ein Gas-Fluid-Gemisch (5) aufweisendes Gehäuse (4) angeordnet ist und in das Fluid (5) oder Gas-Fluid-Gemisch (5) eintaucht,
**dadurch gekennzeichnet,**
**dass** das Synchronriemengetriebe zur Sicherung eines vorspannungsfreien Formschlusses von Synchronriemen (3) und Synchronriemenscheiben (1, 2) dergestalt ausgeführt ist, dass es mindestens ein Stauelement (7, 8) mit radial gekrümmter Staufläche aufweist,
wobei das mindestens eine Stauelement (7, 8) vollständig oder teilweise über einem Segment des Umschlingungsbogens (α, β) des Synchronriemens (3) und über dessen Riemenrücken mit einer radialen Distanz ΔR angeordnet ist, welche kleiner ist als die Zahnhöhe h des Synchronriemens (3),
wobei das mindestens eine Stauelement (7, 8) einteilig oder mehrteilig ausgeführt ist oder von der Innenwand des Getriebegehäuses (4) gebildet ist,
wobei die Synchronriemenscheiben (1, 2) jeweils mindestens eine umlaufend durch das Zahnprofil der Synchronriemenscheibe (1, 2) verlaufende Dekompressionsnut (6.1, 6.2) aufweisen.
